# NEUE EUROPÄISCHE PATENTSCHRIFT

(11) **EP 0 621 420 B2**
(45) Veröffentlichungstag und Bekanntmachung des Hinweises auf die Entscheidung über den Einspruch: **18.10.2000**
(45) Hinweis auf die Patenterteilung: 27.05.1998
(21) Anmeldenummer: 94103843.2
(22) Anmeldetag: 12.03.1994
(51) Int. Cl.: F16H 57/02, F16H 48/08

(54) **Differential für den Achsantrieb eines Kraftfahrzeuges**
Axle drive differential for motor vehicles
Différentiel pour l'entraînement de l'essieu d'un véhicule motorisé

(30) Priorität: 23.04.1993 DE 4313322
(43) Veröffentlichungstag der Anmeldung: 26.10.1994
(73) Patentinhaber: Dr.Ing. h.c. F. Porsche Aktiengesellschaft, 70435 Stuttgart (DE)
(72) Erfinder: Patzer, Jürgen, D-73252 Lenningen (DE); Meffert, Peter, D-75233 Tiefenbronn (DE)

(56) Entgegenhaltungen:
- EP-A- 0 164 544
- WO-A-86/02049
- DE-A- 2 454 067
- DE-A- 3 629 198
- DE-A- 4 042 173
- DE-A- 4 115 304
- DE-A- 4 441 163
- FR-A- 1 081 956
- FR-A- 2 454 565
- GB-A- 445 314
- GB-A- 1 252 520
- JP-A- 61 130 646
- US-A- 1 445 864
- US-A- 1 657 091
- US-A- 3 427 900
- US-A- 4 221 138
- US-A- 4 232 569
- US-A- 4 455 889
- US-A- 5 098 355

## Beschreibung

Die Erfindung betrifft ein Differential für ein Kraftfahrzeug gemäß dem Oberbegriff der Patentansprüche 1 oder 2.

Aus der gattungsgemäßen EP-A 0 164 544 ist ein Differential mit einem Ausgleichsgehäuse bekannt, an dem ein Antriebsrad befestigt ist. Im Inneren des Ausgleichsgehäuses sind jeweils zwei als Kegelräder ausgebildete Ausgleichsräder und Acnswellenräder gelagert, die kämmend miteinander in Eingriff stehen. Die Achswellenräder sind auf Achsantriebswellen angeordnet, während die Ausgleichsräder auf einem Achsbolzen gelagert sind. Sowohl die Ausgleichsräder als auch die Achswellenräder stützen sich an einem diese umfassenden Käfig ab, der innerhalb des Ausgleichsgehäuses angeordnet ist und sich in Achsrichtung der Achsantriebswellen am Ausgleichsgehäuse abstützt.

Aus US - 4 084 450 ist weiterhin ein Differential mit einem gegossenen Ausgleichsgehäuse bekannt, an welches ein Flansch zur lösbaren Befestigung eines als Tellerrad ausgebildeten Antriebsrades angegossen ist. In zwei gegenüberliegenden Bohrungen dieses Gehäuses ist ein Achsbolzen eingepaßt, welcher die Ausgleichsräder trägt. Die den Achsantriebswellen zugeordneten Achswellenräder kämmen mit den Ausgleichsrädern und stützen sich in dem Ausgleichsgehäuse ab. Der zuvor beschriebene Stand der Technik stellt den üblichen Aufbau heutiger Differentiale dar. Dabei fällt das Ausgleichsgehäuse vergleichsweise schwer und massiv aus, da es das über das Tellerrad eingeleitete Antriebsdrehmoment übertragen und die aus der obligatorischen Kegelverzahnung der Ausgleichs- bzw. Achswellenräder resultierenden Kräfte aufnehmen muß. Zur Montage der innen liegenden Räder ist es das Gehäuse, wie in US - 4 084 450, lösbar geteilt ausgeführt oder mit entsprechenden Öffnungen zum Einstecken der Räder versehen. Solche Öffnungen verringern die Steifigkeit des Gehäuses und werden im allgemeinen durch eine entsprechend massive Bauteildimensionierung kompensiert.

Der Erfindung liegt die Aufgabe zugrunde, ein verbesserrtes Differential für den Achsantrieb eines Kraftfahrzeuges zu schaffen, welches steifigkeitsoptimiert , leichtgewichtig, kostengünstig sowie vereinfacht zu montieren ist.

Die Lösung dieser Aufgabe gelingt mit den kennzeichnenden Merkmalen der Patentansprüche 1 oder 2.

Vorteilhafte Ausgestaltungen der Erfindung sind in den abhängigen Ansprüchen genannt.

Wenn bei einem gattungsgemäßen Differential die Achswellenräder in einem Käfig gelagert sind, welcher die in Richtung der Achsantriebswellen wirkenden Kräfte aufnimmt, so ist das Ausgleichsgehäuse von diesen Kräften freigestellt und kann dementsprechend geringer dimensioniert werden. Dieses führt zu einer Reduktion des Gewichtes und der Kosten des Ausgleichsgehäuses. Der separate Käfig erlaubt das Einsetzten der Achswellenräder und des Achsbolzens, bevor das gesamte Differential montiert wird. Diese Möglichkeit der Vormontage vereinfacht und verkürzt den Zusammenbau des Differentials.

Da das Ausgleichsgehäuse von den im Käfig aufgenommenen Kräften freigestellt ist, kann es für die Übertragung des über das z.B. als Tellerrad ausgebildete Antriebsrad eingeleiteten Drehmoments und der dadurch verursachten Kräfte steifigkeitsoptimiert ausgebildet werden. Dieses läßt sich z.B. durch tiefgezogene, dünnwandige Blechteile kostengünstig realisieren.

Das Differential läßt sich in vorteilhafter Ausgestaltung verbessern, wenn das Tellerrad im Bereich der Längsachse des Achsbolzens angeordnet ist. Hierdurch ist ein direkter Kraftfluß vom Tellerrad zum Achsbolzen gewährleistet. Eine besonders einfache, kostengünstige und steife Konstruktion des Ausgleichsgehäuses ist möglich, wenn dieses aus zwei rotationssymmetrischen Töpfen besteht. Diese können direkt, z.B. überlappend, zusammengefügt sein, wobei das Tellerrad im Bereich der Fügung unlösbar aufgesetzt ist, oder indirekt über das Tellerrad, an welches sie gefügt sind, miteinander verbunden sein.

Das Ausgleichsgehäuse kann weiter gewichtserleichtert und der Kraftfluß verbessert werden, wenn der Achsbolzen in einer Ausnehmung des Tellerrades gelagert ist, so daß das eingeleitete Drehmoment direkt vom Tellerrad in diesen Bolzen geleitet wird. Die in Richtung des Achsbolzens wirkende, durch die kegelige Verzahnung der Räder verursachten Kräfte, können sich vorteilhafterweise direkt im Tellerrad abstützen oder in einem geschlossenem Kraftfluß auf dem Achsbolzen abgestützt werden. In beiden Fällen ist das Ausgleichsgehäuse auch von diesen Kräften freigestellt und kann dementsprechend geringer dimensioniert werden.

Wenn der Achsbolzen einseitig oder beidseitig mit Zapfen versehen entweder in Ausnehmungen des Tellerrades schwimmend eingreift, kann sich das Differential selbstätig nach dem herrschenden Kräftegleichgewicht einstellen. Es ist daher besonders unempfindlich gegen Lagetoleranzen der Kegelräder zueinander, welche dementsprechend einfach und kostengünstig gefertigt und zueinander positioniert sein können. Darüber hinaus können aufgrund der für jeden Zahneingriff gleichen Kräfte kleinere Ausgleichskegelräder verwendet werden. Je nach Toleranzlage und nach Kräftegleichgewicht kann der Achsbolzen geringfügig in Richtung der Achswellen wandern, was zwangsläufg über die Kegelverzahnung zu einem geringfügigen Wandern in Längsrichtung des Achsbolzens führt.

Der Mehraufwand für den Käfig läßt sich begrenzen, in dem dieser in einfacher Weise aus die Achswellenräder lagernden, kreisscheibenförmigen Segmenten und diese verbindende Streben gebildet wird. Ein solcher Käfig kann kostengünstig, leichtgewichtig und steif als Blechstanzteil ein- oder zweiteilig hergestellt werden. Bei einteiliger Herstellung wird das Stanzteil durch entsprechende Biegung in die Form des Käfigs gebracht und an einer Stelle gefügt. Bei zweiteiliger Ausbildung werden diese als identische U-förmige Teile gebogen und an zwei Stellen miteinander verbunden. Das vorbeschriebene Differential bietet darüber hinaus den Vorteil, daß das Tellerrad durch den Entfall der Verschraubung mit dem Ausgleichsgehäuse vereinfacht zu fertigen ist und keine Verzüge duch Gewindebohrungen aufweist.

Die rotationssymmetrische Ausbildung der Töpfe ermöglicht gemeinsam mit dem Entfall von Öffnungen zur Montage der Räder eine glatte Oberfläche, welche geringe Panschverluste des in einem das Differential und dessen Antrieb aufnehmenden Achsgehäuses umlaufenden Ausgleichsgehäuses ergibt.

Die geschlossene Ausbildung dieses Ausgleichsgehäuses bietet die Möglichkeit der Kapselung und somit einer eigenen Schmierung des Differentiales getrennt von der im Achsgehäuse erforderlichen Schmierung.

Die Erfindung wird nachfolgend anhand einer schematischen Zeichnung beispielhaft näher erläutert.

Es zeigen:
- Figur 1: einen Schnitt durch ein Differential einer ersten Ausführungsform,
- Figur 2: ein Schnitt durch eine Variante,
- Figur 3: eine Ansicht eines im Tellerrad gelagerten Achsbolzens,
- Figur 4: eine perspektivische Ansicht eines Käfigs zur Lagerung der Achswellenräder,
- Figur 5: ein Schnitt durch den Käfig nach Figur 4 mit eingesetzten Achswellenrädern,
- Figur 6 a - g: Varianten eines Achsbolzens,
- Figur 7 a: die Abwicklung eines Käfigs gemäß Figur 4,

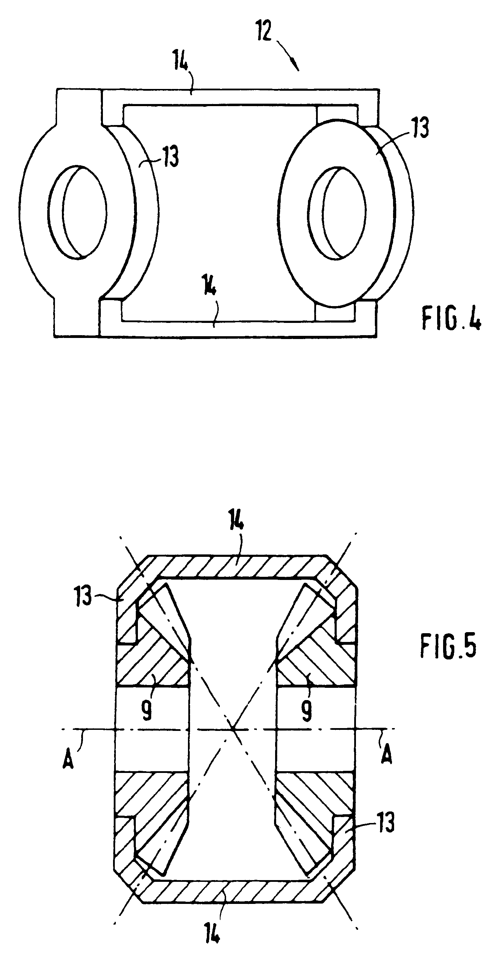

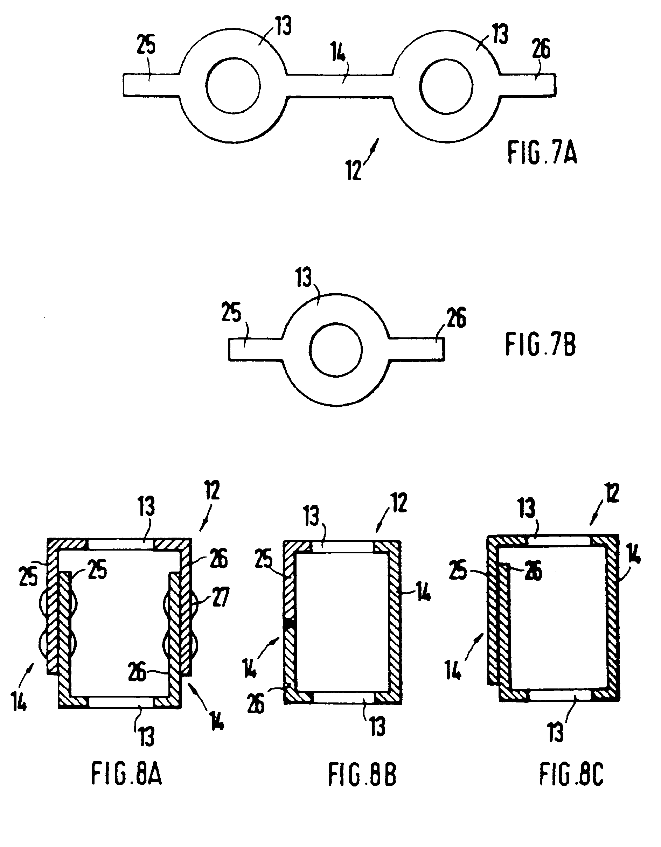

- Figur 7 b: die Abwicklung eines Teiles eines Käfigs gemäß Figur 4 und
- Figur 8 a - c: Draufsichten auf gefügte Käfige gemäß Figur 7 a und b.

Ein Differential für den Achsantrieb eines Kraftfahrzeuges weist ein ein als Tellerrad 1 ausgebildetes Antriebsrad tragendes Ausgleichsgehäuse 2 auf, welches ebenso wie ein das Tellerrad 1 antreibendes Ritzel 3 in einem nur angedeutet gezeichneten Achsgehäuse 4 drehbar gelagert ist.

Das Ausgleichsgehäuse 2 wird aus zwei rotationssymmetrisch zu einer Rotationsachse A-A liegenden Töpfen 5, 6 gebildet, welche identisch sein können.

Ein Achsbolzen 7 lagert drehbar ein Ausgleichsrad 8, welches mit Achswellenrädern 9 kämmt, die auf mit nicht gezeigten Fahrzeugrädern verbundenen Achsantriebswellen 10 drehfest gelagert sind. Ausgleichs- und Achswellenräder 8 und 9 stehen über eine kegelige Verzahnung 11 miteinander im Eingriff.

Die Achswellenräder 9 sind in einem Käfig 12 gelagert, welcher aus kreisscheibenförmigen Segmenten 13 und diese verbindende Streben 14 gebildet ist. Dieser Käfig 12 nimmt die über die kegelige Verzahnung 11 in Richtung der Achse A-A wirkenden Kräfte auf und wird somit auf Zug beansprucht. Das Tellerrad 1 ist im Bereich einer Fügung 15 der Töpfe 5, 6 und in einem Bereich 16 angeordnet, in welchem eine Längsachse B-B des Achsbolzens 7 liegt.

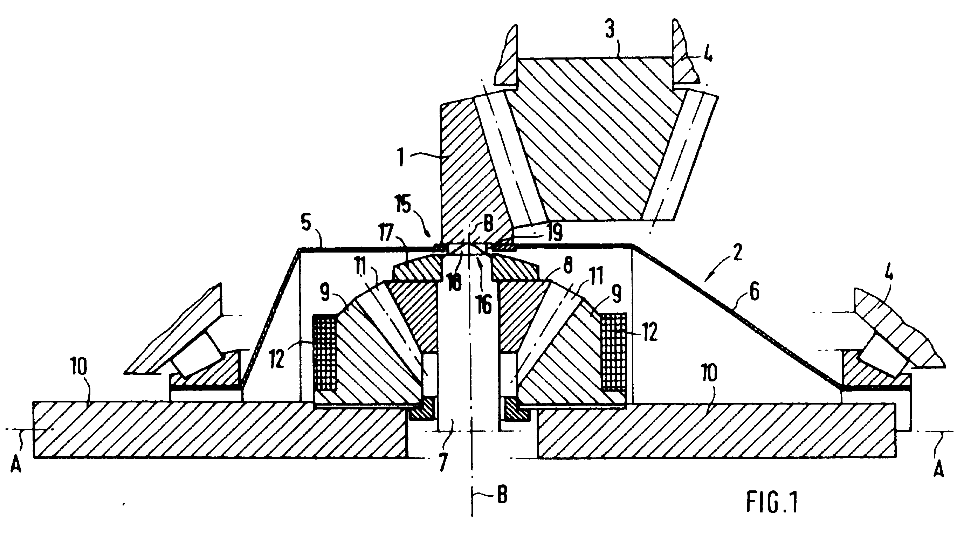

Gemäß Figur 1 sind die Töpfe 5 und 6 im Bereich der Fügung 15 überlappend miteinander verschweißt und das Tellerrad 1 ist, z.B. ebenfalls durch Schweißen, auf diese Fügung 15 aufgesetzt. Das Ausgleichsrad 8 stützt sich in Richtung der Längsachse B-B auf einem auf den Achsbolzen 7 geschweißten Anschlag 17 ab. Endseitig weist dieser Bolzen 7 einen Zapfen 18 auf, mit dem er schwimmend in eine Ausnehmung 19 im Bereich der Fügung 15 eingesetzt ist. Diese Ausnehmung 19 durchsetzt die Fügung 15 und kann zusätzlich auch im Tellerrad 1 ausgebildet sein.

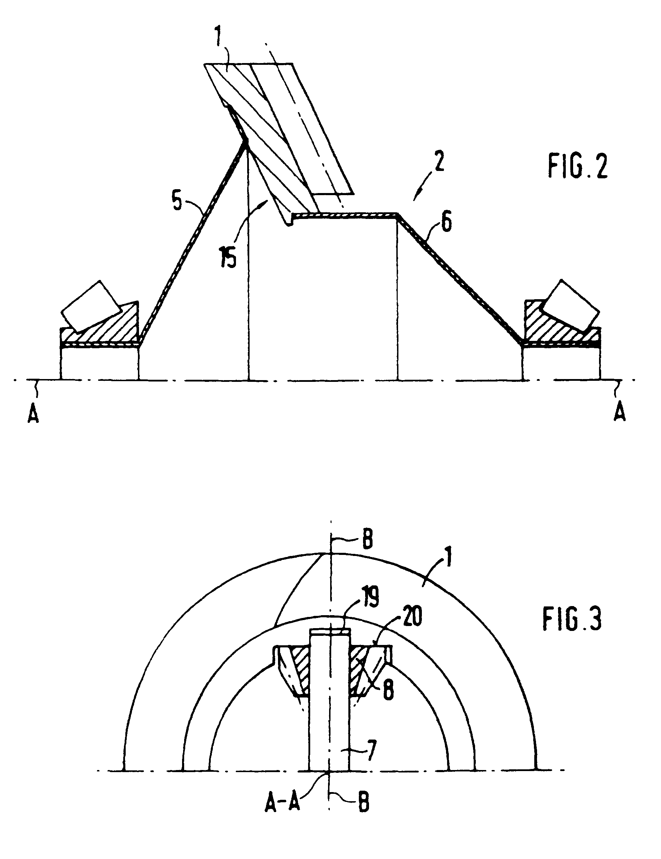

Alternativ können die Töpfe 5 und 6 gemäß Figur 2 an das Tellerrad 1 gefügt sein, wobei die Ausnehmung 19 ausschließlich im Tellerrad 1 gemäß Figur 3 angeordnet sein kann. Gemäß dieser Figur 3 können sich die Ausgleichsräder 8 in Richtung der Längsachse B-B in einer Schulter 20 des Tellerrades 1 abstützen.

Die Ausnehmung 19 ist jeweils so gestaltet, daß der Achsbolzen 7 in Richtung der Rotationsachse A-A und der Längsachse B-B geringfügig verschiebbar ist.

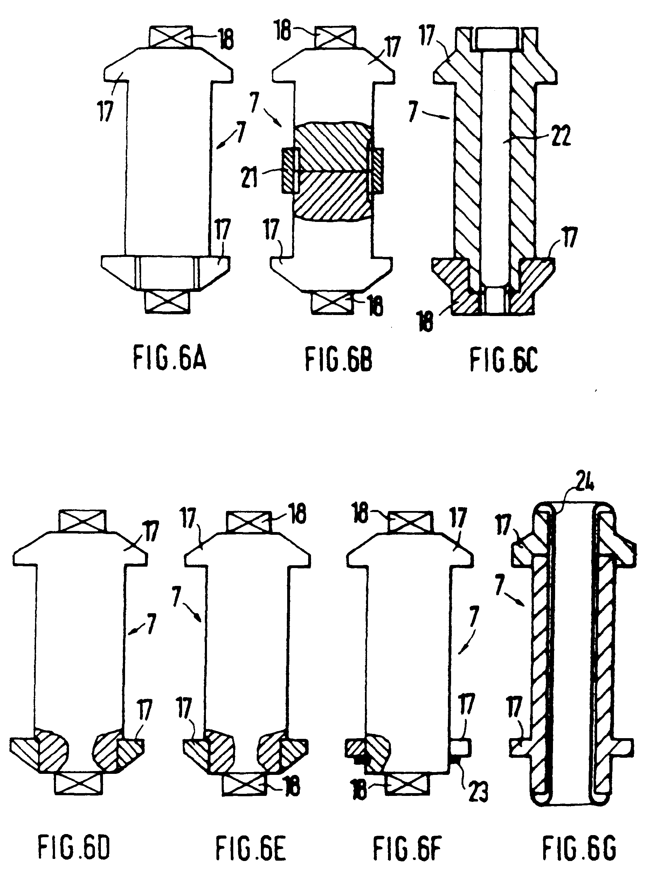

Der Achsbolzen 7 kann für die Anwendung nach Figur 1 z.B. gemäß der Figuren 6 a bis 6 g ausgebildet sein. Figuren 6 a bis 6 c zeigen jeweils mit Verschraubungen versehene Achsbolzen 7, wobei gemäß Figur 6 a der Anschlag 17 an einem oder beiden Enden aufgeschraubt ist. Nach Figur 6 b ist der Achsbolzen 7 geteilt ausgeführt, wobei die Teile mit einer Überwurfmutter 21 aneinander gehalten werden. Die Anschläge 17 können einstückig mit den Teilen des Achsbolzen 7 ausgebildet sein. Figur 6 c zeigt einen hohlen Achsbolzen 7, durch den sich eine als Zuganker wirkende Schraube 22 erstreckt.

Die Figuren 6 d bis 6 g zeigen jeweils Varianten ohne Verschraubung, wobei gemäß Figur 6 d der oder die Anschläge 17 aufgeschweißt und gemäß Figur 6 e aufgeschrumpft sind.

Figur 6 f zeigt einen mit einem Sicherungsring 23 festgelegten Anschlag 17 und Figur 6 g einen hohlen Achsbolzen 7, in dessen Inneren eine Hülse 24 angeordet ist. Diese ist an beiden Enden umgebördelt.

Figuren 7 a und b zeigen Abwicklungen eines Käfigs 12, wobei dieser gemäß Figur 7 a einstückig als Blechstanzteil hergestellt ist und durch Biegung in eine Form gemäß Figur 8 b oder 8 c gebracht wird. Eine der Streben 14 besteht dabei aus zwei Teilstreben 25 und 26, die z.B. gemäß Figur 8 a durch Schweißen oder gemäß Figur 8 c überlappend durch Kleben oder Löten miteinander verbunden werden können. Ein Käfig 12 gemäß Figur 8 a besteht aus zwei identischen Stanzteilen gemäß Figur 7 b und ist nach den zuvor beschriebenen Verfahren oder mittels Nieten 27 gefügt.

## Patentansprüche

1. Differential für den Achsantrieb eines Kraftfahrzeuges, mit einem ein Antriebsrad (1) tragenden Ausgleichsgehäuse (2), in welchem ein Ausgleichsräder (8) tragender Achsbolzen (7) gelagert ist, und diese Ausgleichsräder mit auf Achsantriebswellen (10) angeordneten Achswellenrädern (9) kämmen, die in einem die in Richtung der Achsantriebswellen (10) wirkenden Kräfte aufnehmenden Käfig (12) gelagert sind, und wobei diese Räder als Kegelräder ausgebildet sind, **dadurch gekennzeichnet,** daß das Antriebsrad im Bereich (16) der Längsachse (B-B) des Achsbolzens (7) angeordnet ist, und daß die Ausgleichsräder (8) sich in Richtung der Längsachse (B-B) des Achsbolzens (7) in dem Antriebsrad (1) abstützen so daß ein direkter Kraftfluß vom Antriebsrad (1) zum Achsbolzen (7) gewährleistet ist.

2. Differential für den Achsantrieb eines Kraftfahrzeuges, mit einem ein Antriebsrad (1) tragenden Ausgleichsgehäuse (2), in welchem ein Ausgleichsräder (8) tragender Achsbolzen (7) gelagert ist, und diese Ausgleichsräder mit auf Achsantriebswellen angeordneten Achswellenrädern (9) kämmen, die in einem die in Richtung der Achsantriebswellen (10) wirkenden Kräfte aufnehmenden Käfig (12) gelagert sind, und wobei diese Räder als Kegelräder ausgebildet sind, **dadurch gekennzeichnet,** daß die Ausgleichsräder (8) sich in Richtung der Längsachse (B-B) des Achsbolzens (7) auf diesem abstützend angeordnet sind, wobei die Abstützung durch den Achsbolzen (7) befestigte Anschläge (17) erfolgt. und daß der Achsbolzen (7) in einer Ausnehmung (19) des Antriebsrades (1) gelagert ist so daß ein direkter Kraftfluß vom Antriebsrad (1) zum Achsbolzen (7) gewährleistet ist.

3. Differential nach Anspruch 1, **dadurch gekennzeichnet,** daß das Antriebsrad als Tellerrad (1) ausgebildet ist.

4. Differential nach Anspruch 2, **dadurch gekennzeichnet,** daß das als Tellerrad (1) ausgebildete Antriebsrad im Bereich (16) der Längsachse (B-B) des Achsbolzens (7) angeordnet ist.

5. Differential nach einem der vorhergehenden Ansprüche, **dadurch gekennzeichnet,** daß das Ausgleichsgehäuse (2) aus jeweils rotationssymmetrischen, zusammengefügten Töpfen (5, 6) besteht, wobei das Tellerrad (1) im Bereich der Fügung (15) unlösbar aufgesetzt ist.

6. Differential nach Anspruch 1 oder 2, **dadurch gekennzeichnet,** daß das Ausgleichsgehäuse (2) aus zwei jeweils rotationssymmetrischen Töpfen (5, 6) besteht, welche an das Tellerrad (1) gefügt sind.

7. Differential nach Anspruch 1, **dadurch gekennzeichnet,** daß der Achsbolzen (7) in einer Ausnehmung (19) des Antriebsrades (1) gelagert ist.

8. Differential nach einem der vorhergehenden Ansprüche, **dadurch gekennzeichnet,** daß der Achsbolzen (7) zumindest einseitig mit einem Zapfen (18) versehen ist und in Richtung der Rotationsachse A-A und der Längsachse B-B geringfügig verschiebbar in eine Ausnehmung (19) im Bereich der Fügung (15) eingreift.

9. Differential nach Anspruch 1 oder 2, **dadurch gekennzeichnet,** daß der Käfig (12) aus die Achswellenräder (9) lagernden kreisscheibenförmigen Segmenten (13) und diese verbindende Streben (14) gebildet ist.

## Claims

1. A differential for the axle drive of a motor vehicle, with a differential housing (2) which supports a driving wheel (1) and in which an axle pin (7) supporting differential gearwheels (8) is mounted, and the said differential gearwheels mesh with axle-shaft gearwheels (9) which are arranged on axle-drive shafts (10) and which are mounted in a cage (12) absorbing the forces acting in the direction of the axle-drive shafts (10), wherein the said gearwheels are constructed in the form of bevel gears, **characterized in that** the driving wheel is arranged in the region (16) of the longitudinal axis (**B-B**) of the axle pin (7), and the differential gearwheels (8) are supported within the driving wheel (1) in the direction of the longitudinal axis (**B-B**) of the axle pin (7), so as to ensure a direct flow of power from the driving wheel (1) to the axle pin (7).

2. A differential for the axle drive of a motor vehicle, with a differential housing (2) which supports a driving wheel (1) and in which an axle pin (7) supporting differential gearwheels (8) is mounted, and the said differential gearwheels mesh with axle-shaft gearwheels (9) which are arranged on axle-drive shafts and which are mounted in a cage (12) absorbing the forces acting in the direction of the axle-drive shafts (10), wherein the said gearwheels are constructed in the form of bevel gears, **characterized in that** the differential gearwheels (8) are arranged supported on the axle pin (7) in the direction of the longitudinal axis (**B-B**) of the said axle pin (7), wherein the support is provided by stops (17) secured to the axle pin (7), and the axle pin (7) is mounted in a recess (19) in the driving wheel (1), so as to ensure a direct flow of power from the driving wheel (1) to the axle pin (7).

3. A differential according to Claim 1, **characterized in that** the driving wheel is constructed as a differential crown wheel (1).

4. A differential according to Claim 2, **characterized** **in that** the driving wheel constructed as a differential crown wheel (1) is arranged in the region (16) of the longitudinal axis (**B-B**) of the axle pin (7).

5. A differential according to one of the preceding Claims, **characterized in that** the differential housing (2) comprises respective rotationally symmetrical cups (5, 6) joined together, wherein the differential crown wheel (1) is mounted non-releasably in the region of the join (15).

6. A differential according to Claim 1 or 2, **characterized in that** the differential housing (2) comprises two rotationally symmetrical cups (5, 6) each joined to the differential crown wheel (1).

7. A differential according to Claim 1, **characterized in that** the axle pin (7) is mounted in a recess (19) in the driving wheel (1).

8. A differential according to one of the preceding Claims, **characterized in that** the axle pin (7) is provided with a pin (18) on at least one side and engages in a slightly displaceable manner in a recess (19) in the region of the join (15) in the direction of the axis of rotation (**A-A**) and the longitudinal axis (**B-B**).

9. A differential according to Claim 1 or 2, **characterized in that** the cage (12) is formed by segments (13) in the form of circular discs supporting the axle-shaft gearwheels (9) and struts (14) connecting the said segments (13).

## Revendications

1. Différentiel pour l'entraînement d'essieu d'un véhicule automobile, avec un carter de différentiel (2) portant un pignon d'entraînement (1) et dans lequel est monté à rotation un axe (7) portant des pignons de différentiel (8), et ces pignons de différentiel s'engrenant avec des pignons d'arbre d'essieu (9) disposés sur des arbres d'entraînement d'essieu (10) et tourillonnant dans une cage (12) supportant les efforts agissant dans la direction des arbres d'entraînement d'essieu (10) et ces pignons étant réalisés sous forme de pignons coniques, caractérisé en ce que le pignon d'entraînement est disposé dans la zone (16) de l'axe longitudinal (B-B) de l'axe (7) et en ce que les pignons de différentiel (8) prennent appui dans le pignon d'entraînement (1), dans la direction de l'axe longitudinal (B-B) de l'axe (7), de sorte qu'il se produit un flux de forces direct du pignon d'entraînement (1) vers l'axe (7).

2. Différentiel pour l'entraînement d'essieu d'un véhicule automobile, avec un carter de différentiel (2) portant un pignon d'entraînement (1) et dans lequel un axe (7) portant des pignons de différentiel (8) est monté à rotation, et ces pignons de différentiel s'engrenant avec des pignons d'arbre d'essieu (9) disposés sur des arbres d'entraînement d'essieu (10) et montées à rotation dans une cage (12) supportant les efforts agissant dans la direction des arbres d'entraînement d'essieu (10) et ces pignons étant réalisées sous forme de pignons coniques, caractérisé en ce que les pignons de différentiel (8) sont disposés, dans la direction de l'axe longitudinal (B-B) de l'axe (7), en prenant appui sur celui-ci, l'appui s'effectuant par des butées (17) fixées à l'axe (7), et en ce que l'axe (7) est monté dans un évidement (9) du pignon d'entraînement (1), de sorte qu'il se produit un flux de force direct du pignon d'entraînement (1) vers l'axe (7).

3. Différentiel selon la revendication 1, caractérisé en ce que le pignon d'entraînement est réalisé sous forme de couronne de différentiel (1).

4. Différentiel selon la revendication 2, caractérisé en ce que le pignon d'entraînement réalisé sous forme de couronne de différentiel (1) est disposée dans la zone (16) de l'axe longitudinal (B-B) de l'axe (7).

5. Différentiel selon l'une des revendications précédentes, caractérisé en ce que le carter de différentiel (2) est constitué de pots (5, 6) répondant chacun à une symétrie de rotation et assemblés, la couronne de différentiel (1) étant placée de façon indésolidarisable dans la zone du joint (15).

6. Différentiel selon la revendication 1 au 2, caractérisé en ce que le carter de différentiel (2) est constitué de deux pots (5, 6) répondant chacun à une symétrie de rotation et assemblés sur la couronne de différentiel (1).

7. Différentiel selon la revendication 1, caractérisé en ce que l'axe (7) est monté à rotation dans un évidement (19) du pignon d'entraînement (1).

8. Différentiel selon l'une des revendications précédentes, caractérisé en ce que l'axe (7) est pourvu, au moins sur un côté, d'un tourillon (18) et s'engage de façon déplaçable, sur une petite distance, dans un évidement (19) dans la zone du joint (15), dans la direction de l'axe de rotation A-A de l'axe longitudinal B-B.

9. Différentiel selon la revendication 1 ou 2, caractérisé on ce que la cage (12) est constituée de segments (13) on forme d'anneaux de disque servant au tourillonnement des pignons d'arbre d'essieu (9) et de montants (14) qui les relient.
